# EUROPÄISCHE PATENTSCHRIFT

(11) **EP 1 442 239 B1**
(45) Veröffentlichungstag und Bekanntmachung des Hinweises auf die Patenterteilung: **15.11.2006**
(21) Anmeldenummer: 02777177.3
(22) Anmeldetag: 21.09.2002
(51) Int. Cl.: F16H 61/06, F16D 48/06

(54) **VERFAHREN ZUR SCHALTSTEUERUNG EINES LASTSCHALTGETRIEBES**
METHOD FOR GEARCHANGE CONTROL IN A POWER SHIFT GEARBOX
PROCEDE DE COMMANDE DE CIRCUIT D'UNE BOITE DE VITESSES COUPLABLE SOUS CHARGE

(30) Priorität: 31.10.2001 DE 10153722
(43) Veröffentlichungstag der Anmeldung: 04.08.2004
(73) Patentinhaber: Volkswagen Aktiengesellschaft, 38436 Wolfsburg (DE)
(72) Erfinder: BOTHE, Edgar, 31224 Peine (DE); HINRICHSEN, Uwe, 38124 Braunschweig (DE)
(86) Internationale Anmeldenummer: PCT/EP2002/010631
(87) Internationale Veröffentlichungsnummer: WO 2003/038315

(56) Entgegenhaltungen:
- EP-A- 0 479 737
- DE-A- 4 026 658
- DE-A- 19 614 582
- DE-A- 19 917 575

## Beschreibung

Die Erfindung betrifft ein Verfahren zur Schaltsteuerung eines Lastschaltgetriebes, insbesondere eines Kraftfahrzeuges, bei dem zeitlich überschnitten eine kommende, dem neuen Gang zugeordnete Kupplungseinheit geschlossen und eine gehende, dem alten Gang zugeordnete Kupplungseinheit geöffnet wird, wobei die Kupplungseinheiten als dauerschlupfgeregelte Nasskupplungen ausgebildet sind, das Schließen der kommenden Kupplungseinheit in etwa bis auf einen der Kupplungskapazität der gehenden Kupplungseinheit entsprechenden Arbeitsdruck erfolgt, und dem Schließen der kommenden Kupplungseinheit eine mit einem Befüllende abgeschlossene Befüllung mit einem Befülldruck vorausgeht.

Unter einem Lastschaltgetriebe wird ein Schalt- bzw. Gangwechselgetriebe verstanden, bei dem während eines Gangwechsels die Kraftübertragung von dem Antriebsmotor zu den angetriebenen Rädern des Kraftfahrzeuges aufrecht erhalten bleibt, d.h. bei einer Zughochschaltung im Zugbetrieb des Kraftfahrzeuges keine Zugkraftunterbrechung und bei einer Schubrückschaltung im Schubbetrieb des Kraftfahrzeuges keine Schubkraftunterbrechung auftritt. Bekannte Bauformen des Lastschaltgetriebes sind der Getriebeautomat und das Doppelkupplungsgetriebe. Bei einem Getriebeautomat, der eine einzige, zumeist einem Drehmomentwandler nachgeschaltete Eingangswelle aufweist, wird ein Gangwechsel, d.h. eine Änderung des wirksamen Übersetzungsverhältnisses, dadurch erreicht, dass mindestens eine erste Getriebekomponente eines Planetenradsatzes durch das Öffnen einer zugeordneten Kupplung bzw. Bremse von der Eingangswelle oder dem Getriebegehäuse gelöst und eine zweite Getriebekomponente durch das Schließen einer dieser zugeordneten Kupplung bzw. Bremse mit der Eingangswelle verbunden oder gegenüber dem Getriebegehäuse arretiert wird. Bei einem Doppelkupplungsgetriebe, das zwei Eingangswellen mit jeweils einer Motorkupplung und einer Gruppe in aufsteigender Reihenfolge wechselseitig zugeordneter Gänge aufweist, wird ein Gangwechsel dadurch bewerkstelligt, dass nach dem Einlegen des neuen Ganges die dem alten Gang zugeordnete Motorkupplung geöffnet und die dem neuen Gang zugeordnete Motorkupplung geschlossen wird. Abgesehen von einem getriebeinternen Einlegen des neuen Ganges und dem Auslegen des alten Ganges beim Doppelkupplungsgetriebe laufen die Schaltvorgänge bei beiden Getriebebauarten weitgehend identisch ab, nämlich derart, dass eine dem neuen Gang zugeordnete kraftschlüssig wirksame kommende Kupplungseinheit geschlossen und eine dem alten Gang zugeordnete kraftschlüssig wirksame gehende Kupplungseinheit geöffnet wird, wobei das Schließen und Öffnen der Kupplungseinheiten zur Aufrechterhaltung des Kraftflusses zeitlich überschnitten erfolgt, d.h. die Kupplungskapazität der kommenden Kupplungseinheit in dem Umfang gesteigert wird wie die Kupplungskapazität der gehenden Kupplungseinheit gesenkt wird. Als hierfür geeignete kraftschlüssig wirksame Kupplungseinheiten kommen zumeist hydraulisch steuerbare Nasskupplungen in Form von Lamellenkupplungen zur Anwendung, die wenig Bauraum in Anspruch nehmen, preiswert herstellbar sind, und über den Arbeitsdruck in dem jeweils zugeordneten Druckraum präzise steuerbar sind, was die Grundvoraussetzung für die überschnittene Steuerung eines Gangwechsels ist. Besonders geeignet für eine derartige Steuerung sind dauerschlupfgeregelte Lamellenkupplungen, da bei diesen das übertragbare Drehmoment (Kupplungskapazität) jeweils proportional zu dem als Anpressdruck wirksamen Arbeitsdruck in dem jeweiligen Druckraum ist. Bei einer derartigen Nasskupplung geht dem eigentlichen Schließen der dem neuen Gang zugeordneten kommenden Kupplungseinheit eine Befüllphase voraus, in der der zugeordnete Druckraum bis zum Anlegen der zugeordneten Kupplungselemente (Kupplungslamellen) und dem Beginn der Übertragung eines kleinen Schleppmomentes befüllt wird. Der Befülldruck, der am Ende der Befüllung erreicht wird, entspricht üblicherweise einem Drehmoment, das etwa 10% des aktuell in der gehenden Kupplungseinheit übertragbaren Drehmomentes entspricht und in der Größenordnung von 20 Nm bis 30 Nm liegt. Nach dem Stand der Technik werden für das Befüllen der kommenden Kupplungseinheit 200 ms bis 400 ms, bei Kälte auch bis zu 1000 ms benötigt. Daher wird die maximale Befülldauer vorgesehen, in der unter ungünstigsten Betriebsbedingungen, d.h. bei einem Kaltstart bei extremer Kälte mit entsprechend zähflüssigem Druckmittel (Hydrauliköl), das Befüllen des Druckraumes bis zum Anlegen der zugeordneten Kupplungselemente sicher erreicht wird, bevor entsprechend verzögert die Kupplungsüberschneidung beginnen kann.

Moderne Getriebeautomaten und Lastschaltgetriebe werden üblicherweise über ein elektronisches Steuergerät automatisch gesteuert, weisen aber neben einem Automatikmodus zunehmend auch einen Manuellmodus auf. Im Automatikmodus werden die Schaltvorgänge abhängig von Fahrzeugparametern, wie z.B. der momentanen Fahrgeschwindigkeit, der Motordrehzahl, und der Motorlast, ausgelöst und durchgeführt, wobei die Schaltpunkte abhängig von einem gewählten Steuerungsprogramm (Eco oder Sport) unterschiedlich bestimmt werden können. Der Fahrer wird im Automatikmodus von dem jeweiligen Schaltvorgang weitgehend überrascht. Da die Dauer der Befüllphase in diesem Fall nicht wahrgenommen werden kann, empfindet der Fahrer den Schaltvorgang abhängig vom Verlauf des Schließens und Öffnens der beiden Kupplungseinheiten als mehr oder weniger komfortabel bzw. sportlich. Im Manuellmodus, der durch die Positionierung des Wählhebels in einer separaten Manuellschaltgasse, oder einfach durch die Betätigung von im Lenkradbereich angeordneten Schaltelementen, wie z.B. +/- - Schaltern im Lenkrad oder +/- - Schaltrudern hinter dem Lenkrad, aktiviert werden kann, wird der Schaltvorgang jeweils von dem Fahrer manuell ausgelöst, der Schaltvorgang selbst läuft dann aber wie im Automatikmodus automatisch gesteuert ab. Bei manueller Auslösung wird der Schaltvorgang dann von dem Fahrer, insbesondere wenn er eine sportlich-dynamische Fahrweise bevorzugt, häufig als zu wenig spontan und insgesamt zu langsam ablaufend empfunden.

Prinzipiell ist zwar bekannt, hydraulisch gesteuerte Schaltvorgänge durch eine Erhöhung des Arbeitsdruckes zu beschleunigen, dies ist aber ohne weiteres nicht auf einen überschnittenen Gangwechsel anwendbar. Beispielsweise ist aus der DE 40 26 658 A1 eine Drucksteuereinrichtung zur Beeinflussung des Schließverhaltens von Lastschaltkupplungen eines Lastschaltgetriebes bekannt, bei der ein einziges Regelventil vorgesehen ist, dessen Steuerungscharakteristik durch das Zu- und Abschalten einer Vorspannkolbeneinrichtung und einer Zusatzdrossel individuell an mehrere Lastschaltkupplungen bzw. den diesen zugeordneten Gangstufen anpassbar ist. Durch das Zuschalten der Vorspannkolbeneinrichtung wird ein erhöhter Befüllenddruck erreicht und die Befüllphase der betreffenden Lastschaltkupplung verlängert, entsprechend ergibt sich aufgrund des erhöhten Reibanfangsdruckes (= Befüllenddruck) eine kürzere Rutschphase und damit eine härtere Schaltung. Durch das Zuschalten der parallel zu einer permanent genutzten Drossel angeordneten Zusatzdrossel in einer Steuerleitung des Regelventiles wird der Druckgradient der Rutschphase vergrößert, wodurch die Rutschphase verkürzt wird und die Schaltung härter erfolgt, insgesamt wird aber keine wesentliche Verkürzung des Schaltablaufes erreicht. Im übrigen besteht bei einer schnelleren Anhebung des Arbeitsdruckes der kommenden Kupplungseinheit die Gefahr, dass es zu einer Verspannung des Lastschaltgetriebes kommt, wenn die Öffnung der gehenden Kupplung nicht schnell genug erfolgen kann.

Die EP 479 737 A offenbart ein Verfahren nach dem Oberbegriff des Anspruchs 1, wobei die Befüllung der kommenden Kupplungseinheit mit einem erhöhten Druck erfolgt.

Es ist das Problem der vorliegenden Erfindung, ein Verfahren bereitzustellen, mit dem bei einem Lastschaltgetriebe der eingangs genannten Art der Ablauf einer manuell ausgelösten Lastschaltung, die sowohl eine Zughochschaltung als auch eine Schubrückschaltung sein kann, ohne das Auftreten einer Verspannung wesentlich beschleunigt wird, so dass ein Fahrer eine spontane Reaktion auf sein Schaltkommando und eine schnelle Durchführung des gewünschten Schaltvorganges erfährt.

Das Problem wird erfindungsgemäß in Verbindung mit dem Verfahren des Anspruches 1 gelöst.

Vorteilhafte Ausgestaltungen des erfindungsgemäßen Verfahrens sind in den Unteransprüchen 2 bis 9 aufgeführt.

Durch die Befüllung der kommenden Kupplungseinheit mit einem deutlich erhöhten Befülldruck wird die Befüllphase wesentlich verkürzt und dauert nun etwa 50 bis 100 ms, bei extremer Kälte auch bis zu 150 ms. Um eine Verspannung des Getriebes zu vermeiden, wird das Befüllende ermittelt, d.h. geeignete physikalische Größen des Antriebsstranges sensiert und ausgewertet, und bei erkanntem Befüllende die gehende Kupplungseinheit geöffnet und die kommende Kupplungseinheit angepasst, d.h. abhängig von dem Abbau des übertragbaren Drehmomentes der gehenden Kupplungseinheit auf die angestrebte Kupplungskapazität, die in etwa der Kupplungskapazität der gehenden Kupplung vor dem Schaltvorgang entspricht, eingestellt. Der Befülldruck der kommenden Kupplungseinheit kann auf etwa 80% bis 90% oder aber auf etwa 100% der Druckhöhe eingestellt werden, die der Kupplungskapazität der gehenden Kupplungseinheit entspricht. Im ersten Fall bedeutet die Anpassung der kommenden Kupplungseinheit dann eine Anhebung und eine Feinjustierung und im zweiten Fall nur eine Feinjustierung des Arbeitsdruckes auf die erforderliche Druckhöhe zur Übertragung des aktuellen Motordrehmomentes. Da Verarbeitung des Sensorsignales und die Auslösung der Kupplungsüberschneidung von der Sensierung des Befüllendes an nur ca. 50 ms in Anspruch nimmt und auch der eigentliche Gangwechsel aufgrund des angehobenen Befülldruckes der kommenden Kupplungseinheit deutlich weniger Zeit in Anspruch nimmt, verkürzt sich die Gesamtschaltdauer im Vergleich zum Stand der Technik von derzeit 400 ms bis 1000 ms auf 150 ms bis 300 ms. Damit wird der von einem Fahrer ausgelöste Schaltvorgang spontan und schnell umgesetzt. Für den Fahrer äußert sich der Einsatz des erfindungsgemäßen Verfahrens somit in einer spürbaren Verbesserung der Schaltspontaneität.

Um eine schnelle Öffnung der gehenden Kupplungseinheit zu erreichen, erfolgt die Entleerung bzw. Drucklosschaltung des zugeordneten Druckraumes zweckmäßig über eine im Vergleich zu einem Normalbetrieb, d.h. bei Schaltungen im Automatikmodus und bei lastarmen Schaltungen im Manuellmodus, vergrößerte Drossel. Hierzu ist es denkbar, dass über ein Schaltventil zwischen einer kleineren. Drossel für Normalbetrieb und einer parallel angeordneten größeren Drossel für den erfindungsgemäßen 'Dynamikbetrieb' umgeschaltet wird, oder dass bei 'Dynamikbetrieb' der kleineren Drossel zur Vergrößerung des Durchflussquerschnittes über ein Schaltventil eine weitere, parallel angeordnete Drossel zugeschaltet wird.

Das Befüllende der kommenden Kupplungseinheit kann durch eine Sensierung des Arbeitsdruckes und / oder durch die Ermittlung des Druckgradienten des Arbeitsdruckes in einem Druckraum der kommenden Kupplungseinheit ermittelt werden. Während der Befüllphase steigt der Druck in dem Druckraum aufgrund von Strömungsverlusten zunächst nur geringfügig an, steigt dann aber mit abnehmendem Volumenstrom vor dem Ende der Befüllphase stark an, und erreicht gegen Ende der Befüllphase mit dem Anlegen der Kupplungslamellen den angesteuerten Befülldruck. Daher kann ein unmittelbar mit dem Druckraum der kommenden Kupplungseinheit in Verbindung stehender Drucksensor zur Sensierung des Befüllendes verwendet werden, durch den der momentan in dem Druckraum wirksame Arbeitsdruck messbar und einer Auswerteeinheit zuleitbar ist, in der der gemessene Druck mit einem vorgegebenen Grenzwert verglichen und ein Differenzenquotient mit mindestens einem der letzten Messwerte und der entsprechenden Zeitdifferenz zur Bestimmung des momentanen Druckgradienten gebildet und mit einem vorgegebenen Grenzwert verglichen werden kann. Dadurch kann dann das Erreichen und Überschreiten eines vorab definierten Druckgrenzwertes, z.B. von 90% oder 95% des Sollwertes des Befülldruckes, der zum Ende der Befüllphase erreicht wird, und / oder das Über- oder Unterschreiten eines vorab definierten Druckgradienten in dem Druckraum der kommenden Kupplungseinheit ermittelt und als Befüllende interpretiert werden. Bei der Verwendung des momentanen Druckgradienten kann der starke Druckanstieg gegen Ende der Befüllphase ermittelt und die Überschreitung eines vorgegebenen, entsprechend hohen Druckgradienten als Entscheidungskriterium zur Erkennung des Befüllendes genutzt werden. Es ist aber auch möglich, die Abschwächung des starken Druckanstieges unmittelbar vor dem Ende der Befüllphase zu ermitteln und dann die Unterschreitung eines entsprechend niedrigeren Druckgradienten (nach vorheriger Überschreitung) als Entscheidungskriterium zu verwenden.

Alternativ oder zusätzlich dazu kann die Ermittlung des Befüllendes der kommenden Kupplungseinheit aber auch durch eine Sensierung einer beginnenden Verspannung des Lastschaltgetriebes erfolgen. Da bei einer beginnenden Verspannung ein Teil des eingangsseitig anliegenden Drehmomentes in die Verspannung des Getriebes fließt und somit das ausgangsseitige Drehmoment kurzfristig absinkt, kommt es bei einer Zughochschaltung zu einer Abschwächung der Fahrzeugbeschleunigung und bei einer Schubrückschaltung zu einer Zunahme der Fahrzeugverzögerung. Demzufolge wird vorteilhaft die Fahrzeugbeschleunigung bzw. -verzögerung sensiert und das Erreichen und Unterschreiten eines vorab definierten Beschleunigungs- bzw. Verzögerungsgrenzwertes als Befüllende interpretiert. Wird mit beginnender Übernahme eines Drehmomentes durch die kommende Kupplungseinheit der Arbeitsdruck in der gehenden Kupplung durch die Dauerschlupfregelung automatisch reduziert, kann auch der Arbeitsdruck in einem Druckraum der gehenden Kupplungseinheit sensiert werden, und das Erreichen und Unterschreiten eines vorab definierten Druckgrenzwertes in der gehenden Kupplungseinheit als Befüllende interpretiert werden. Aufgrund einer beginnenden Verspannung des Getriebes kommt es bei einer Zughochschaltung auch zu einer Entspannung des begrenzt elastischen, als Torsionsfeder wirksamen abtriebsseitigen Antriebsstranges, der aus einer Kardanwelle, einem Differenzialgetriebe und jeweils einer Antriebswelle bestehen kann und im Zugbetrieb getriebeseitig vorauseilend aufgezogen ist. Entsprechend ergibt sich bei einer Schubrückschaltung eine Verstärkung der Vorspannung des abtriebsseitigen Antriebsstranges, der im Schubbetrieb getriebeseitig nacheilend aufgezogen ist. In beiden Schaltungsfällen kommt es daher zu einer getriebeseitig nacheilenden Relativbewegung des getriebeseitigen Endes des abtriebsseitigen Antriebsstranges gegenüber dem radseitigen Ende. Dieser Umstand kann genutzt werden, um eine beginnende Verspannung des Getriebes zu erkennen, und zwar dadurch, dass eine getriebeseitige und eine radseitige Drehzahl des abtriebsseitigen Antriebsstranges sensiert wird, und das Erreichen und Überschreiten einer vorab definierten positiven Differenz zwischen der radseitigen und der getriebeseitigen Drehzahl, die ggf. um das Übersetzungsverhältnis eines Differentialgetriebes korrigiert ist, als Befüllende interpretiert wird.

Zumindest die letzten Verfahrensschritte zur Ermittlung des Befüllendes lassen jeweils alleine angewandt unter Umständen keine eindeutige Interpretation zu, da z.B. Änderungen der Fahrzeugbeschleunigung und der Vorspannung des abtriebsseitigen Antriebsstranges auch von äußeren Einflüssen, wie beispielsweise von einer Änderung der Fahrbahnlängsneigung und von Unebenheiten in der Fahrbahndecke, hervorgerufen werden können. Es ist daher vorteilhaft, wenn mehrere der zuvor beschriebenen Kriterien zur Bestimmung des Befüllendes herangezogen werden. Hierzu können die betreffenden Verfahrensschritte zunächst unabhängig voneinander durchgeführt werden, die Ergebnisse bewertet und die daraus abgeleiteten Ergebniswerte zu einer Bewertungssumme aufsummiert werden. Schließlich kann dann das Erreichen und Überschreiten eines vorab definierten Summengrenzwertes durch die Bewertungssumme als Befüllende interpretiert werden. Hierdurch ist dann eine größtmögliche Sicherheit bei der Bestimmung des Befüllendes und damit zur Vermeidung einer Verspannung des Getriebes gegeben.

Weitere Einzelheiten der Erfindung ergeben sich aus der nachfolgenden ausführlichen Beschreibung und den beigefügten Zeichnungen, die beispielhaft zur Erläuterung des erfindungsgemäßen Verfahrens dienen.

Hierzu zeigen:
- Fig. 1a-1c: Drehzahl- und Drehmomentverläufe einer erfindungsgemäßen Zughöchschaltung, und
- Fig. 2a - 2c: Drehzahl- und Drehmomentverläufe einer Zughochschaltung nach dem Stand der Technik.

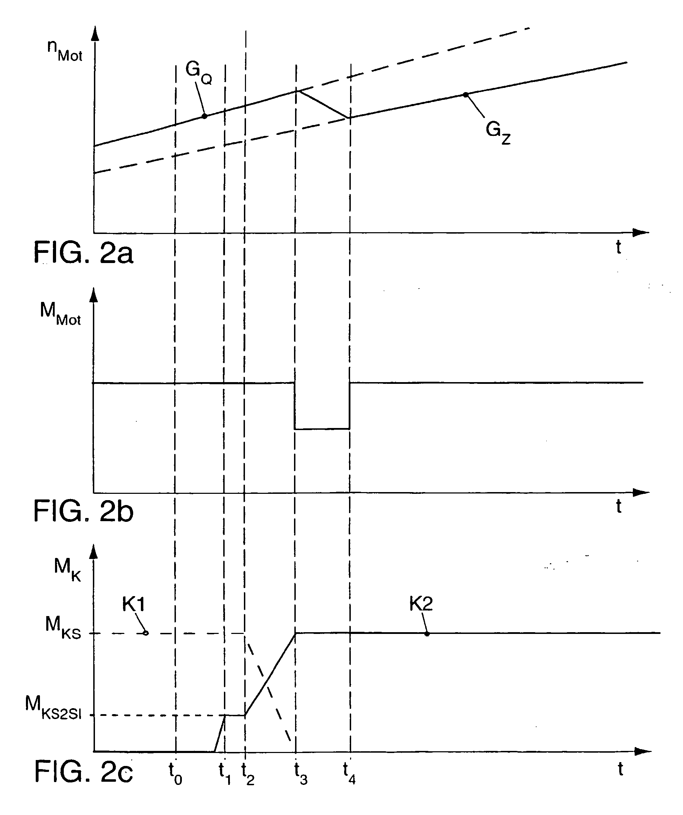

In den Fig. 2a bis 2c sind die zeitlichen Drehzahl- und Drehmomentverläufe einer nach dem Stand der Technik ablaufenden Zughochschaltung dargestellt, in Fig. 2a der Drehzahlverlauf des Antriebsmotors n_{Mot}(t), in Fig. 2b der Drehmomentverlauf des Antriebsmotors M_{Mot}(t), und in Fig. 2c Drehmomentverläufe der gehenden Kupplungseinheit M_{K1}(t) und der kommenden Kupplungseinheit M_{K2}(t). Die Schaltung beginnt mit der vom Zeitpunkt t₀ bis zum Zeitpunkt t₁ ablaufenden Befüllung der kommenden Kupplungseinheit K2, in der ein zugeordneter Druckraum unter einem Befülldruck p_{F} mit einem Druckmittel befüllt und gegen Ende der Befüllphase die entsprechenden Kupplungselemente, z.B. bei einer Lamellenkupplung die Kupplungslamellen, unter Erreichung des Befülldruckes p_{F} zur Anlage gebracht werden und die kommende Kupplungseinheit K2 ein geringes Schleppmoment M_{K2_S1} überträgt, das etwa 15% des Schaltdrehmomentes M_{K_S} vor und nach der Schaltung entspricht. Die Dauer der Befüllphase hängt neben den baulichen Gegebenheiten im wesentlichen von der Zähigkeit des verwendeten Druckmittels (Hydrauliköls) ab und beträgt im vorliegenden Beispiel etwa 300 ms, kann aber bei einem Kaltstart unter extremer Kälte bis zu 1000 ms in Anspruch nehmen. Damit das Ende der Befüllphase sicher erreicht werden kann, ist insgesamt ein Zeitfenster für die Befüllung der kommenden Kupplungseinheit K2 vom Zeitpunkt t₀ bis zum Zeitpunkt t₂ von 400 ms vorgesehen, so dass sich im vorliegenden Fall zwischen den Zeitpunkten t₁ und t₂ eine Sicherheitspause von 100 ms ergibt. Danach folgt zwischen den Zeitpunkten t₂ und t₃ die Überschneidungsphase, in der das übertragbare Drehmoment (Kupplungskapazität) M_{K1} der gehenden Kupplungseinheit K1, der der niedrigere alte Gang (Quellgang) G_{Q} zugeordnet ist, von dem Schaltdrehmoment M_{K_S} auf Null reduziert und die Kupplungskapazität M_{K2} der kommenden Kupplungseinheit K2, der der höhere neue Gang (Zielgang) G_{z} zugeordnet ist, von dem Schleppmoment M_{K2-S1} auf das Schaltdrehmoment M_{K_S} erhöht wird. Somit ist das weitgehend konstante Motordrehmoment M_{Mot} bzw. Schaltdrehmoment M_{K_S} während der Überschneidungsphase, die vorliegend etwa 300 ms in Anspruch nimmt, stetig und ohne eine Zugkraftunterbrechung von dem alten Gang G_{Q} bzw. der zugeordneten gehenden Kupplungseinheit K1 auf den neuen Gang G_{z} bzw. die zugeordnete kommende Kupplungseinheit K2 übergegangen. Nachfolgend .wird durch einen entsprechenden Eingriff in die Motorsteuerung (siehe Fig. 2a und Fig. 2b) zwischen den Zeitpunkten t₃ und t₄ über einen Zeitraum von etwa 300 ms durch ein kurzzeitiges Absenken und Wiederanheben des Motordrehmomentes M_{Mot} eine Drehzahlanpassung zum Übergang von der Übersetzung des alten Ganges G_{Q} auf die Übersetzung des neuen Ganges G_{z} vorgenommen. Der gesamte Schaltvorgang dauert insgesamt etwa 1000 ms, wobei bis zu einer von einem Fahrer wahrnehmbaren Reaktion, nämlich dem Beginn der Drehzahlanpassung zum Zeitpunkt t₃, etwa 700 ms vergehen. Bei einer manuellen Auslösung wird eine derartige Schaltung von dem Fahrer, insbesondere wenn er eine sportlich-dynamische Fahrweise bevorzugt, als zu wenig spontan und insgesamt zu langsam ablaufend empfunden.

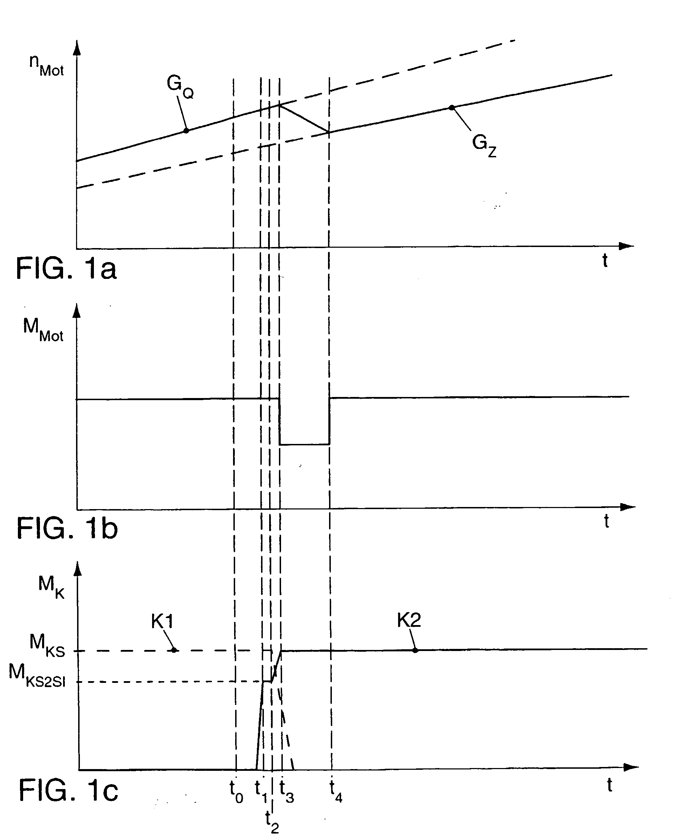

Im Gegensatz dazu läuft eine vergleichbare Zughochschaltung, die nach dem vorliegenden erfindungsgemäßen Verfahren gesteuert abläuft, wie in den Fig. 1a bis Fig. 1c dargestellt ist, wesentlich spontaner und schneller ab. Erfindungsgemäß wird hier die kommende Kupplungseinheit K2 in der Befüllphase zwischen dem Zeitpunkt t₀ bis zum Zeitpunkt t₁ mit einem erhöhten Befülldruck p_{F} befüllt, der einem Schleppmoment M_{K2_S1} bzw. einer Kupplungskapazität von etwa 85% des Schaltdrehmomentes M_{K_S} entspricht. Daher nimmt die Befüllphase vorliegend nur etwa 100 ms in Anspruch. Um eine Verspannung des Getriebes zu vermeiden, wird das Befüllende ermittelt, was durch eine Sensierung des Befülldruckes p_{F} der kommenden Kupplungseinheit K2 und / oder durch eine Sensierung einer beginnenden Verspannung des betreffenden Getriebes erfolgen kann. Durch die Verarbeitung entsprechender Sensorsignale und die Auslösung der Kupplungsüberschneidung in einer entsprechenden Steuerungseinheit vergehen vom Erreichen des Befüllendes zum Zeitpunkt t₁ bis zum Beginn der Kupplungsüberschneidung zum Zeitpunkt t₂ etwa 25 ms. Die zwischen den Zeitpunkten t₂ und t₃ ablaufende Überschneidungsphase, in der das übertragbare Drehmoment (Kupplungskapazität) M_{K1} der gehenden Kupplungseinheit K1, der der niedrigere alte Gang G_{Q} zugeordnet ist, von dem Schaltdrehmoment M_{K_S} auf Null reduziert und die Kupplungskapazität M_{K2} der kommenden Kupplungseinheit K2, der der höhere neue Gang G_{Z} zugeordnet ist, von dem Schleppmoment M_{K2_S1} auf das Schaltdrehmoment M_{K_S} erhöht wird, fällt aufgrund einer schnellen Öffnung der gehenden Kupplungseinheit K1 und des hohen Befülldruckes p_{F} der kommenden Kupplungseinheit K2 mit etwa 50 ms besonders kurz aus. Danach schließt sich, wie schon zuvor beschrieben, zwischen den Zeitpunkten t₃ und t₄ über etwa 300 ms eine motorseitig gesteuerte Drehzahlanpassung zum Übergang von dem Übersetzungsverhältnis des alten Ganges Gₒ auf das Übersetzungsverhältnis des neuen Ganges G_{z} an (siehe Fig. 1a und Fig. 1b). Nunmehr dauert der gesamte Schaltvorgang insgesamt nur mehr etwa 475 ms, wobei bis zu der von einem Fahrer wahrnehmbaren Reaktion, dem Beginn der Drehzahlanpassung zum Zeitpunkt t₃, nur etwa 175 ms vergehen. Für einen Fahrer äußert sich der Einsatz des erfindungsgemäßen Verfahrens in einer spürbaren Verbesserung der Schaltspontaneität. Das Verfahren ermöglicht somit eine sportlich-dynamische Fahrweise, die der Fahrer bei einem Wechsel von einem Automatikmodus in einen Manuellmodus der Getriebesteuerung im allgemeinen auch wünscht.

### BEZUGSZEICHENLISTE

- G_{Q}: alter Gang, Quellgang
- G_{Z}: neuer Gang, Zielgang
- K1: gehende Kupplungseinheit
- K2: kommende Kupplungseinheit
- M_{K}: übertragbares Kupplungsdrehmoment, Kupplungskapazität
- M_{K1}: Kupplungskapazität von K1
- M_{K2}: Kupplungskapazität von K2
- M_{K_S}: Schaltdrehmoment
- M_{K2_S1}: Schleppmoment von K2
- M_{Mot}: Motordrehmoment
- n_{Mot}: Motordrehzahl
- p_{F}: Befülldruck
- t: Zeit
- t₀: Beginn des Schaltvorganges, Beginn der Befüllung von K2
- t₁: Ende der Befüllung von K2
- t₂: Beginn der Kupplungsüberschneidung
- t₃: Ende der Kupplungsüberschneidung, Beginn der Drehzahlanpassung
- t₄: Ende der Drehzahlanpassung, Ende des Schaltvorganges

## Patentansprüche

1. Verfahren zur Schaltsteuerung eines Lastschaltgetriebes, insbesondere eines Kraftfahrzeuges, bei dem eine kommende, dem neuen Gang G_{z} zugeordnete Kupplungseinhelt K2 geschlossen und eine gehende, dem alten Gang G_{Q} zugeordnete Kupplungseinheit K1 geöffnet wird, wobei die Kupplungseinheiten K1, K2 als schlupfgeregelte NasskuppJungen ausgebildet sind, das Schließen der kommenden Kupplungseinheit K2 in etwa bis auf einen der Kupplungskapazität M_{K_S} der gehenden Kupplungselnheit K1 entsprechenden Arbeitsdruck erfolgt, und dem Schließen der kommenden Kupplungseinheit K2 eine mit einem Befüllende abgeschlossene Befüllung mit einem Befülldruck p_{F} vorausgeht, wobei bei einer manuell ausgelösten Lastschaltung die Befüllung der kommenden Kupplungseinheit K2 mit einem der Größenordnung der Kupplungskapazität M_{K_S} der gehenden Kupplungseinheit K1 entsprechenden, erhöhten Befülldruck p_{F} erfolgt, nämlich dass der Befülldruck p_{F} der kommenden Kupplungseinheit K2 , also die Druckhöhe in einem Bereich von etwa 80% bis 90% oder aber auf etwa 100% eingestellt wird, die der Kupplungskapazität M_{K_S} der gehenden Kupplungseinheit K1 entspricht, **dadurch gekennzeichnet dass** das Befüllende dieser Befüllphase ermittelt wird, und dass bei dem erhöhten Befülldruck und erkanntem Befüllende zeitlich überschnitten die gehende Kupplungseinheit K1 geöffnet und die Kupplungskapazität M_{K2} der kommenden Kupplungseinheit K2 angepasst wird.

2. Verfahren nach Anspruche 1, **dadurch gekennzeichnet, dass** die gehende Kupplungseinheit K1 zur Beschleunigung ihrer Öffnung über eine im Vergleich zu einem Normalbetrieb, nämlich bei Schaltungen im Automatikmodus und bei lastarmen Schaltungen im Manuellmodus, vergrößerte Drossel drucklos geschaltet wird.

3. Verfahren nach einem der Ansprüche 1 oder 2, **dadurch gekennzeichnet, dass** die Ermittlung des Befüllendes der kommenden Kupplungseinheit K2 durch eine Sensierung des Arbeitsdruckes und / oder durch die Ermittlung des Druckgradienten des Arbeitsdruckes in einem Druckraum der kommenden Kupplungseinheit K2 erfolgt.

4. Verfahren nach Anspruch 3, **dadurch gekennzeichnet, dass** das Erreichen und Überschreiten eines vorab definierten Druckgrenzwertes und / oder das Über- oder Unterschreiten eines vorab definierten Druckgradienten in der kommenden Kupplungseinheit K2 als Befüllende interpretiert wird.

5. Verfahren nach einem der Ansprüche 1 bis 4, **dadurch gekennzeichnet, dass** die Ermittlung des Befüllendes der kommenden Kupplungseinheit K2 durch eine Sensierung einer beginnenden Verspannung des Lastschaltgetriebes erfolgt.

6. Verfahren nach Anspruch 5, **dadurch gekennzeichnet, dass** die Fahrzeugbeschleunigung bzw. -verzögerung sensiert wird, und dass das Erreichen und Unterschreiten eines vorab definierten Beschleunigungs- bzw. Verzögerungsgrenzwertes als Befüllende interpretiert wird.

7. Verfahren nach Anspruch 5 oder 6, **dadurch gekennzeichnet, dass** der Arbeitsdruck in einem Druckraum der gehenden Kupplungseinheit K1 sensiert wird, und dass das Erreichen und Unterschreiten eines vorab definierten Druckgrenzwertes in der gehenden Kupplungseinheit K1 als Befüllende interpretiert wird.

8. Verfahren nach einem der Ansprüche 5 bis 7, **dadurch gekennzeichnet, dass** eine getriebeseitige und eine radseitige Drehzahl des abtriebsseitigen Antriebsstranges sensiert wird, und dass das Erreichen und Überschreiten einer vorab definierten positiven Differenz zwischen der radseitigen und der getriebeseitigen Drehzahl als Befüllende interpretiert wird.

9. Verfahren nach den Ansprüchen 3 bis 8, **dadurch gekennzeichnet, dass** mehrere der Verfahrensschritte gemäß den Ansprüchen 3 bis 8 zur Ermittlung des Befüllendes durchgeführt werden, dass das jeweilige Ergebnis der verwendeten Verfahrensschritte bewertet und die daraus abgeleiteten Ergebniswerte zu einer Bewertungssumme aufsummiert werden, und dass das Erreichen und Überschreiten eines vorab definierten Summengrenzwertes durch die Bewertungssumme als Befüllende interpretiert wird.

## Claims

1. Method for the shift control of a power shift transmission, in particular of a motor vehicle, in which an incoming clutch unit K2 assigned to the new gear G_{z} is closed and an outgoing clutch unit K1 assigned to the old gear G_{Q} is opened, the clutch units K1, K2 being designed as wet clutches with slip regulation, the closing of the incoming clutch unit K2 taking place approximately up to a working pressure corresponding to the clutch capacity M_{K_S} of the outgoing clutch unit K1, and the closing of the incoming clutch unit K2 being preceded by a filling with a filling pressure p_{F}, said filling being concluded by a filling end, wherein, in the event of a manually triggered power shift, the filling of the incoming clutch unit K2 with an increased filling pressure p_{F} corresponding to the order of magnitude of the clutch capacity M_{K_S} of the outgoing clutch unit K1 takes place, i.e. in that the filling pressure p_{F} of the incoming clutch unit K2, i.e. the pressure level, is set in a range from about 80% to 90% or even about 100% which corresponds to the clutch capacity M_{K_S} of the outgoing clutch unit K1, **characterized in that** the filling end of this filling phase is determined, and **in that**, with the increased filling pressure and the filling end detected, with a time overlap, the outgoing clutch unit K1 is opened and the clutch capacity M_{K2} of the incoming clutch unit K2 is adapted.

2. Method according to Claim 1, **characterized in that** the outgoing clutch unit K1, in order to accelerate its opening, is switched to pressureless via a throttle which is enlarged, as compared with normal operation i.e. in the case of shift in the automatic mode and in the case of low-power shifts in the manual mode.

3. Method according to one of Claims 1 or 2, **characterized in that** the determination of the filling end of the incoming clutch unit K2 takes place by a sensing of the working pressure and/or by the determination of the pressure gradient of the working pressure in a pressure space of the incoming clutch unit K2.

4. Method according to Claim 3, **characterized in that** the reaching and overshooting of a predefined pressure limit value and/or the overshooting or undershooting of a predefined pressure gradient in the incoming clutch unit K2 is interpreted as the filling end.

5. Method according to one of Claims 1 to 4, **characterized in that** the determination of the filling end of the incoming clutch unit K2 takes place by a sensing of a commencing distortion of the power shift transmission.

6. Method according to Claim 5, **characterized in that** the vehicle acceleration or deceleration is sensed, and **in that** the reaching and undershooting of a predefined acceleration or deceleration limit value is interpreted as the filling end.

7. Method according to Claim 5 or 6, **characterized in that** the working pressure in a pressure space of the outgoing clutch unit K1 is sensed, and **in that** the reaching and undershooting of a predefined pressure limit value in the outgoing clutch unit K1 is interpreted as the filling end.

8. Method according to one of Claims 5 to 7, **characterized in that** a transmission-side and a wheel-side rotational speed of the driven-side drive train are sensed, and **in that** the reaching and overshooting of a predefined positive difference between the wheel-side and the transmission-side rotational speed is interpreted as the filling end.

9. Method according to Claims 3 to 8, **characterized in that** a plurality of the method steps according to Claims 3 to 8 for determining the filling end are carried out, **in that** the respective result of the method steps used is assessed and the result values derived from these are added up to form an assessment sum, and **in that** the reaching and overshooting of a predefined sum limit value by the assessment sum is interpreted as the filling end.

## Revendications

1. Procédé de commande de changement de rapport d'une boîte de vitesses couplable sous charge, notamment d'un véhicule automobile, avec lequel une unité d'accouplement K2 arrivante, associée au nouveau rapport G_{z}, est fermée et une unité d'accouplement K1 partante, associée à l'ancien rapport G_{Q}, est ouverte, les unités d'accouplement K1, K2 étant réalisées sous la forme d'accouplements mouillés régulés par patinage, la fermeture de l'unité d'accouplement arrivante K2 s'effectuant jusqu'à une pression de service correspondant approximativement à la capacité d'accouplement M_{K_S} de l'unité d'accouplement partante K1, et un remplissage s'achevant avec la fin du remplissage à une pression de remplissage p_{F} précédant la fermeture de l'unité d'accouplement arrivante K2, le remplissage de l'unité d'accouplement arrivante K2 en cas de changement de rapport déclenché manuellement s'effectuant avec une pression de remplissage p_{F} accrue correspondant à l'ordre de grandeur de la capacité d'accouplement M_{K_S} de l'unité d'accouplement partante K1, à savoir que la pression de remplissage p_{F} de l'unité d'accouplement arrivante K2, c'est-à-dire le niveau de pression, est réglée dans une plage d'environ 80 % à 90 % ou encore à environ 100 %, qui correspond à la capacité d'accouplement M_{K_S} de l'unité d'accouplement partante K1, **caractérisé en ce que** la fin du remplissage de cette phase de remplissage est déterminée et que lorsque la pression de remplissage est accrue et la fin du remplissage est détectée, l'unité d'accouplement partante K1 est ouverte et la capacité d'accouplement M_{K2} de l'unité d'accouplement arrivante K2 est adaptée avec chevauchement dans le temps.

2. Procédé selon la revendication 1, **caractérisé en ce, que** l'unité d'accouplement partante K1, pour accélérer son ouverture, est mise hors pression par le biais d'un élément d'étranglement agrandi par rapport au fonctionnement normal, à savoir lors des changements de rapport en mode automatique et lors des changements de rapport à faible charge en mode manuel.

3. Procédé selon l'une des revendications 1 ou 2, **caractérisé en ce que** la détermination de la fin du remplissage de l'unité d'accouplement arrivante K2 s'effectue par une détection de la pression de service et/ou par la détermination du gradient de pression de la pression de service dans un espace de pression de l'unité d'accouplement arrivante K2.

4. Procédé selon la revendication 3, **caractérisé en ce que** l'atteinte et le dépassement d'une valeur limite de la pression définie à l'avant et/ou le franchissement dans un sens ou dans l'antre d'un gradient de pression défini à l'avance dans l'unité d'accouplement arrivante K2 est interprété comme la fin du remplissage.

5. Procédé selon l'une des revendications 1 à 4, **caractérisé en ce que** la détermination de la fin du remplissage de l'unité d'accouplement arrivante K2 s'effectue par une détection d'un début de gauchissement de la boîte de vitesses.

6. Procédé selon la revendication 5, **caractérisé en ce que** l'accélération ou le ralentissement du véhicule est détecté et que l'atteinte et le franchissement vers le bas d'une valeur limite de l'accélération ou du ralentissement définie à l'avance est interprété comme la fin du remplissage.

7. Procédé selon la revendication 5 ou 6, **caractérisé en ce que** la pression de service dans un espace de pression de l'unité d'accouplement partante K1 est détectée et que l'atteinte et le franchissement vers le bas d'une valeur limite de la pression définie à l'avance dans l'unité d'accouplement partante K1 est interprété comme la fin du remplissage.

8. Procédé selon l'une des revendications 5 à 7, **caractérisé en ce qu'**une vitesse de rotation côté boîte de vitesses et côté roue de la chaîne de transmission côté sortie est détectée et que l'atteinte et le dépassement d'une différence positive définie à l'avance entre la vitesse de rotation côté roue et côté boîte de vitesses est interprété comme la fin du remplissage.

9. Procédé selon l'une des revendications 3 à 8, **caractérisé en ce que** plusieurs des étapes du procédé selon les revendications 3 à 8 sont exécutées pour déterminer la fin du remplissage, que le résultat correspondant des étapes employées du procédé est évalué et les valeurs qui en sont dérivées du résultat sont additionnées pour former une somme d'évaluation et que l'atteinte et le dépassement par la somme d'évaluation d'une valeur limite de la somme définie à l'avance est interprétée comme la fin du remplissage.
